# EUROPEAN PATENT APPLICATION

(11) **EP 1 443 407 A1**
(43) Date of publication of application: **04.08.2004**
(21) Application number: 02750756.5
(22) Date of filing: 26.06.2002
(51) Int. Cl.: G06F 13/00

(54) **A METHOD TO ADD STORAGE FEATURE TO COMPUTER PERIPHERALS AND ITS ARCHITECTURE**

(30) Priority: 23.10.2001 CN 01129816
(71) Applicant: Netac Technology Co., Ltd., Shenzhen, Guangdong 518031 (CN)
(72) Inventor: DENG, Guoshun 6A Blk. 2. Jindicuiyuan, Shenzhen Guangdong 518048 (CN); CHENG, Xiaohua, Tongzhou District Beijing 101101 (CN); XIANG, Feng, Shenzhen Guangdong 518026 (CN)
(74) Representative: Molyneaux, Martyn William
(86) International application number: PCT/CN2002/000444
(87) International publication number: WO 2003/036483

(57) **Abstract**

The present invention discloses a method of adding storage function to computer peripherals and architecture thereof. It solves the problem that the computer peripherals do not have storage function, and cannot carry drive programs and relevant data files. The present invention is to add semiconductor storage device to various computer peripherals, and have the storage device readily identifiable and readable by a host computer, while the added semiconductor storage devices will not affect application functions of the computer peripherals. The computer peripherals of the present invention utilize the universal bus interface to connect with the host computer, including the application system capable of performing the application function of the computer peripherals and the additional semiconductor storage device. Through the host computer, the drive program, application program, and data files can be read or written or operated in the additional semiconductor storage device. The present invention can be used in various computer peripherals, such as printers, scanners, plotters, video cameras, modem, storage device or digital cameras, MP3, PDA, etc.

## Description

### TECHNICAL FIELD

The present invention relates to electronics equipments, specifically to computer peripherals, more particularly to a method and architecture to add a semiconductor storage module to computer peripherals to provide them with storage function.

### BACKGROUND ART

With the development of the electronic technology and computer technology, various computer peripherals have been designed and manufactured, such as printers, scanners, plotters, video cameras, modems, storage devices, digital cameras, MP3s, PDAs (Personal Digital Assistant), etc. However, computer peripherals do not usually have storage function except the storage devices, such as floppy disks, hard disks, CDs, and flash disks. The printer has only printing function, and the scanner has only scanning function. Further, drive programs are necessary for all of computer peripherals to contact to the computer to work normally. The available computer operating systems are generally provided with drive programs only for the standard or very common devices, that is, support only directly the standard or common computer peripherals, such as hard disks, floppy disks (floppy disk drives), CDs (CDROM drives), etc., while drive programs are necessarily provided for using other kinds of computer peripherals. Since these computer peripherals do not have storage function themselves, their drive programs should be stored in floppy disks, CDs or web stations. If drive programs of the devices are not installed in the computer, the user must find drive programs of computer peripherals from floppy disks, CDs or web stations when he or she uses these peripherals for the first time, and the devices can only work normally after the installation of drive programs in the computer. Drive disks can be easily lost, damaged or forgotten so that the user may feel very inconvenient when installation thereof is needed. The aforesaid situation is more obvious when the user reinstalls the computer or installs the peripherals to other computers. This gives the user extra burden and trouble to safe keep drive disks of various devices. The separation of drive programs from devices has troubled users in the computer field for many years, and there is not any perfect solution until now.

In conclusion, it is highly desirable to have a technology of providing computer peripherals with storage function themselves so that drive programs, various data and files can be directly stored in the devices, and the users of the devices do not need additional storage devices, such as floppy disks or CDs.

The present invention is just for solving the aforesaid deficiency in the prior art and the inconvenience of use. It adds the storage function to all devices, especially to computer peripherals such that drive programs, relevant data and files, and other data files can be directly stored in the devices. Therefore, it not only provides convenience to the users and device providers, but also provides the devices with various kinds of usages and functions.

### SUMMARY OF THE INVENTION

The present computer peripherals do not have storage function. It requires that drive programs and relevant document data and files be stored in the floppy disks or CDs, and thus it is not convenient. Quite often, it is found that drive disks are lost or damaged and can no longer be used when a computer peripheral, after being moved, needs to be installed on a new computer. In addition, it is also necessary to find floppy disks or CDs for backup after the update of drive programs. In view of the aforesaid deficiency and inconvenience, the purpose of the invention is to add storage function to computer peripherals so as to provide computer peripherals with the storage space in which their drive programs, relevant data, and files can be stored.

The present invention discloses a method of adding storage function to computer peripherals, characterized in that a semiconductor storage device is provided in a computer peripheral of all kinds, and can be readily identified, read and written by a host computer, and the addition of the semiconductor storage device will not affect applications of the computer peripheral.

In the method of adding storage function to computer peripherals, a universal bus interface switch is used to select the various computer peripherals or the added semiconductor storage devices to be connected with the host computer respectively and to be identified by the host computer, thereby performing the applications of the various computer peripherals or the storage function of the added semiconductor storage devices. A universal bus interface hub may also be used to connect simultaneously various computer peripherals and the additional semiconductor storage devices to the host computer such that the various computer peripherals and additional semiconductor storage devices can be identified by the host computer, thereby carrying out the applications of the various computer peripherals and the storage function of the added semiconductor storage devices. Alternatively, a multiple controller sub-module is used to realize the universal bus interface control of the various computer peripherals and the added semiconductor storage devices with the host computer such that they can be identified simultaneously by the host computer and perform their functions.

The present invention also discloses a computer peripheral having added storage function, which is connected to the host computer through the universal interface. It includes an application system which can realize the application functions of the computer peripherals, an additional semiconductor storage device from and into which drive programs, application programs, data files, and the like can be read and written by the host computer, and application programs can be carried out.

The computer peripheral having the additional storage function can perform the function of previous peripheral systems, such as the printing function of printers and scanning function of scanners and so on. At the same time, the storage function can be carried out, thereby performing the device protocol of floppy disk drives, simulating and realizing the storage function of a floppy disk running in the floppy disk drive; or performing the device protocol of CD drives, simulating and realizing the storage function of a CD running in the CDROM drive; or performing the device protocol of the hard disk, simulating and realizing the storage function of hard disk; or performing the device protocol of a ZIP disk, simulating and realizing the storage function of the ZIP disk; or further performing the device protocol of a MO disk, simulating and realizing the storage function of the MO disk.

The computer peripheral having additional storage function utilizes both of the multiple controller sub-module and the semiconductor memory sub-module to realize the storage function of the semiconductor storage devices. Both of the multiple controller sub-module and application system sub-module together can realize the application function of the computer peripheral of the application system. The multiple controller sub-module realizes the control of the universal bus interface between the application system and the additional semiconductor storage device and the host computer, wherein the multiple controller sub-module completes the connection with the host system, and interprets, converts, controls and transmits the universal interface protocol, to finish the initialization and control of the universal bus interface. The application system and additional semiconductor storage device have different logical unit number, wherein the multiple controller sub-module receives data packets from the host though the universal bus interface, and distributes them to the application system sub-module or semiconductor memory sub-module according to the logical unit number in the data. The multiple controller sub-module also receives data packets from the application system sub-module or semiconductor memory sub-module, and then indicates the corresponding logical unit number in data packets, and sends them to the host system though the universal bus interface.

The computer peripheral of the present invention having additional storage function also includes a universal bus interface switch or universal bus interface hub, wherein the universal bus interface switch can select to perform the storage function or connect the previous peripheral system directly with the host computer to perform the function of the previous peripheral system; while the universal bus interface hub can select simultaneously to perform the storage function and to connect the previous peripheral system with the host computer to perform the function of the previous peripheral system, wherein the storage function and the function of the previous peripheral system can be simultaneously identified by the host computer. The universal bus interface switch and the universal bus interface hub are electronically connected with the universal bus interface and the controller sub-module.

The semiconductor storage medium of the present invention can be Flash Memory or EEPROM or MRAM or FRAM, and the like or select two or more of the aforesaid storage medium. The semiconductor storage medium module corresponds to one or more memory spaces, each memory space corresponding to one memory disk. The space of each memory disk can be divided again, into data area and special information area, wherein the special information in the special information area includes information, code, user digital signature, and so on related to the memory disk. The special information area may not be necessarily provided. There can be a buffer in the semiconductor storage medium module, and the buffer can be used as a temporary memory for the data exchange. Again, the buffer may not be needed.

The additional semiconductor storage device of the present invention may have a special information area in the semiconductor storage medium module for storing the information, code and user digital signature, and the like with respect to the device. The special information area may not be necessarily provided.

In the computer peripheral of the present invention having additional storage function, the drive program of the device can be stored in the semiconductor storage medium module to implement the function of self-provided drive program, and to carry other data files and document data, etc.

The computer peripherals of the present invention having additional storage function may also include an enabling switch, and the enabling switch can enable and disable the function of the additional semiconductor storage device. That is, when the switch is in a disabled state, the function of the additional semiconductor module is disabled, while the functions of the previous peripheral systems are not increased or decreased. When the switch is open, the function of the additional semiconductor module is enabled, thereby the additional semiconductor storage function is added to the functions of the previous peripheral systems. The enabling switch is connected electrically with the memory controller sub-module, but the switch may not be necessarily provided.

The size of the additional semiconductor memory module of the present invention is very small, and thus can be easily put into the computer peripherals to add the storage function thereof, and to have self-provided drive programs. The computer peripherals which can have the additional semiconductor storage function are printers, scanners, plotters, video cameras, modems, storage devices and digital cameras, MP3s, PDAs (personal digital assistant), and so on.

The invention adopts a unique design, wherein the semiconductor memory module is added into the computer peripherals to give them the additional storage function, and thus various device protocols can be realized in the interface application layer of the additional semiconductor memory module so as to simulate and perform the storage function of the memory disk. One or more memory spaces are set in the semiconductor storage medium, that is, one or more functions of memory disks. The invention accomplishes entirely that the computer peripherals may have the storage function for self-provided drive programs, data and files; thereby saving a lot of troubles or burdens of safe keeping the floppy disks or CDROM disks of drive programs for use of the computer peripherals. The additional semiconductor memory module of the present invention has advantages of small in size, low cost, stabile performance, and good reliability. It can assure that the computer peripherals of the host system have its own drive program all the time, update of its drive program anytime and anywhere, and internal storage of the relevant data files or document data.

### BRIEF DESCRIPTION OF THE DRAWINGS

The preferred embodiments of the invention will be described in more details with reference to the accompanying drawings, in which:
FIG. 1 is a block diagram of universal function of the present invention.
FIG. 2 is a functional block diagram of the present invention using USB interface.
FIG. 3 is a functional block diagram of the present invention using IEEE 1394 interface.
FIG. 4 is a distribution diagram of memory spaces of the embodiment of the present invention as shown in FIG. 2.
FIG. 5 is an internal working flow chart of the embodiment of the present invention as shown in FIG. 2.
FIG. 6 is a working flow chart of the embodiment of the present invention as shown in FIG. 2, wherein the manufacturer uses the additional memory disk to store programs and files when the switch is used internally.
FIG. 7 is a working flow chart of the embodiment of the present invention as shown in FIG. 2, wherein the user uses the additional memory disk and its device when the switch is used internally.
FIG. 8 is a working flow chart of the embodiment of the present invention as shown in FIG. 2, wherein the manufacturer uses the additional memory disk to store the programs and files when the USB HUB is used internally.
FIG. 9 is a working flow chart of the embodiment of the present invention as shown in FIG. 2, wherein the user uses the additional memory disk and its device when the USB HUB is used internally.
FIGS. 10A, 10B, 10C are circuit schematic diagrams of a practical mode of the embodiment of the present invention as shown in FIG. 2.
FIG. 11 is a block diagram of universal function of an embodiment of the present invention.
FIG. 12 is a block functional diagram of the embodiment of the invention as shown in FIG. 11 using USB interface.
FIG. 13 is a block functional diagram of the embodiment of the invention as shown in FIG. 11 using IEEE 1394 interface.

### DETAIL DESCRIPTION OF PREFERRED EMBODIMENTS

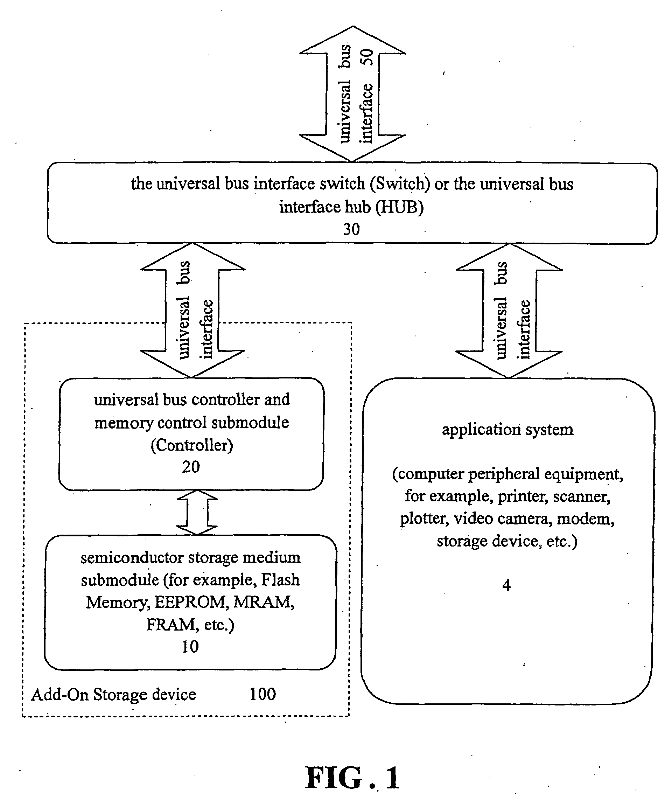

FIG. 1 is a block diagram of universal function of the present invention. The application system (the previous common computer peripheral) 400 which can perform the application function of the computer peripheral and AOSD (Add-On Storage device) 100 can be connected to the universal bus interface switch (Switch) or universal bus interface hub (HUB) sub-module 30 connected with the host computer system through the universal bus interface 60. The Add-On Storage device 100 includes a universal bus interface controller and storage controller sub-module (Controller) 20, and semiconductor storage medium sub-module 10. The semiconductor storage medium sub-module 10 is connected with the universal bus interface controller and storage controller sub-module (Controller) 20, and the universal bus interface and storage controller sub-module (Controller) 20 and application system 4 that can implement the application function of the computer peripheral are connected respectively with the universal bus interface switch (Switch) or universal bus interface hub (HUB) sub-module 30. All of these connections support the bidirectional flow of signals and data.

The application system (the previous common computer peripheral) 400 includes an application system universal interface controller sub-module 40 and application system sub-module 50.

The computer peripheral having additional storage function of the present invention can perform the following functions through the universal bus interface switch or universal bus interface hub 30, that is, selecting Add-On Storage device 100 to connect with the host computer through the universal bus interface switch, serving as a memory disk being connected with the host computer, writing/reading data files or application files to/from the memory disk by the host computer, and operating the application programs. It may also select the application system 400 to connect the host computer to operate directly through the universal bus interface switch to implement the application function of the computer peripheral. Alternatively, both Add-On Storage device 100 and application system 400 can be selected to connect with the host computer through the universal bus interface hub, wherein the host computer can identify and support both of Add-On Storage device 100 and the application system 400.

The computer peripheral having additional storage function of the present invention may also include an additional semiconductor module enabling switch, which can enable or disable the function of Add-On Storage device 100. That is, when the switch is in a disabled state, the function of Add-On Storage device 100 is disabled, while the functions of the application system 400 are not increased or decreased. When the switch is in an enabled state, the function of the additional semiconductor module is enabled so that the function of the additional semiconductor memory is added to the application system. The enabling switch as described above is connected to the Add-On Storage device 100.

The semiconductor memory module 10 includes one or more semiconductor storage medium chips, and the semiconductor storage medium can be, but not limited to, Flash Memory, EEPROM, FRAM, SRAM, DRAM, SDRAM or MRAM, which are connected in the existing addressing mode. The function of the module is to store the drive programs and other data of the application system 400, that is, the previous common computer peripherals, so as to realize the function of self-provided drive programs of the computer peripherals.

The semiconductor sub-module 10 corresponds to a memory space, which can be divided into at least two memory spaces.

The universal bus interface control sub-module 20 of the Add-On storage device implements the connection with the host computer system, to interpret, convert, control and transmit the universal interface protocol. It completes the initialization and control of the universal bus interface 60, receives the command and data sent from the host computer, interprets and carries out the commands from the host computer, stores/reads the data to/from the semiconductor memory sub-module 10, and provides the operation result back to the host computer through the universal bus interface 60.

The universal bus interface 60 can be the interface of the previous computer peripheral, namely the interface of the application system 400 and the host computer. It can also be other interfaces, such as wire universal interfaces, including, but not limited to, USB interface, IEEE1394 interface; or wireless universal interface, including, but not limited to, Bluetooth interface, IrDA infrared interface, HomeRF interface, IEEE802.11a interface, and IEEE802.11b interface. The universal bus interface 60 can be a non-standard bus interface as well.

The Add-On storage device 100 can implement the device protocol of floppy disk drive to simulate and perform the storage function of a floppy disk running in the floppy disk drive; or the device protocol of CDROM drive to simulate and perform the storage function of a CD running in the CDROM drive; or the device protocol of a hard disk to simulate and perform the storage function of the hard disk; or further the device protocol of ZIP disk to simulate and perform the storage function of ZIP disk; or the device protocol of a MO disk to simulate and perform the storage function of the MO disk. The device protocol that the memory disk supports is UFI protocol, or SFF80201 protocol, or SFF80701 protocol, or SCSI Transparent Command Set protocol, or Reduced Block Commands (RBC) T10 Project1240-D protocol, or ZIP disk protocol, or MO disk protocol.

The current computer operating systems all support technology criteria of these standard interfaces and storage so that the computer peripherals having Add-On Storage device 100 can be directly used on these current computer operating systems, and do not need any additional drive programs themselves, while use the drive programs provided from the operating systems.

The computer peripheral having Add-On Storage device 100 does not have to use the standard interface technology criteria.

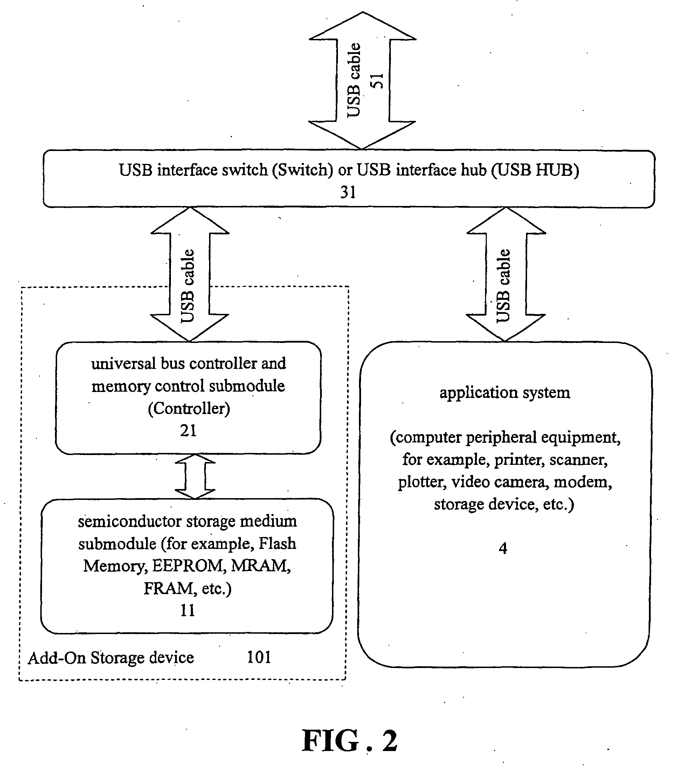

Another embodiment of the invention is shown in FIG. 2, which is a block functional diagram of the computer peripheral having the added storage function. The application system 400 and Add-On Storage device 100 are connected to a USB interface switch (Switch) or USB interface hub (HUB) 31, wherein the Add-On Storage device 100 is connected to the host computer system through USB (Universal Serial Bus) interface 51. The Add-On Storage device 100 includes a storage device USB interface controller sub-module 21, a Flash Memory sub-module 11; a USB interface switch (Switch) or USB HUB 31 that are connected respectively with the application system 400 and storage device USB interface control sub-module 21. The storage device USB interface controller sub-module (Controller) 21 is connected with the Flash Memory sub-module 11. All of these connections support the bidirectional flow of signals and data.

The application system 400 includes the application system USB interface control sub-module 41 and application system sub-module 50.

In the present embodiment, the universal interface is a USB interface, and the semiconductor storage medium is a Flash Memory. The Flash Memory sub-module 11 includes one or more semiconductor Flash Memory chips, connected in the existing addressing mode. The function of the module is to store drive programs and other data of the previous common computer peripherals, that is, the application system 400.

The Flash Memory sub-module 11 corresponds to a memory space, or can be divided into at least two memory spaces.

The storage device USB interface control sub-module 21 implements the connection with the host computer system, interprets, converts, controls and transmits USB interface protocol, and it completes the initialization and control of the USB interface 61, receives the commands and data sent from the host computer, interprets and carries out the commands from the host computer, writes/reads the data into/from the Flash Memory sub-module 10, and sends the operation result back to the host computer through the USB interface 61.

The USB interface switch or USB interface hub 31 implements the function of the USB interface switch or USB interface hub, wherein the USB interface switch can select Add-On Storage device 100 to connect with the host computer, serving as a memory disk connected with the host computer, or select the application system 400 to connect with the host computer to operate directly, performing the function of the previous computer peripheral. The USB interface hub can select the Flash Memory sub-module 11 and application system 400 to connect with the host computer at the same time, wherein the host computer identifies and supports both of Add-On Storage device 100 and the application system 400.

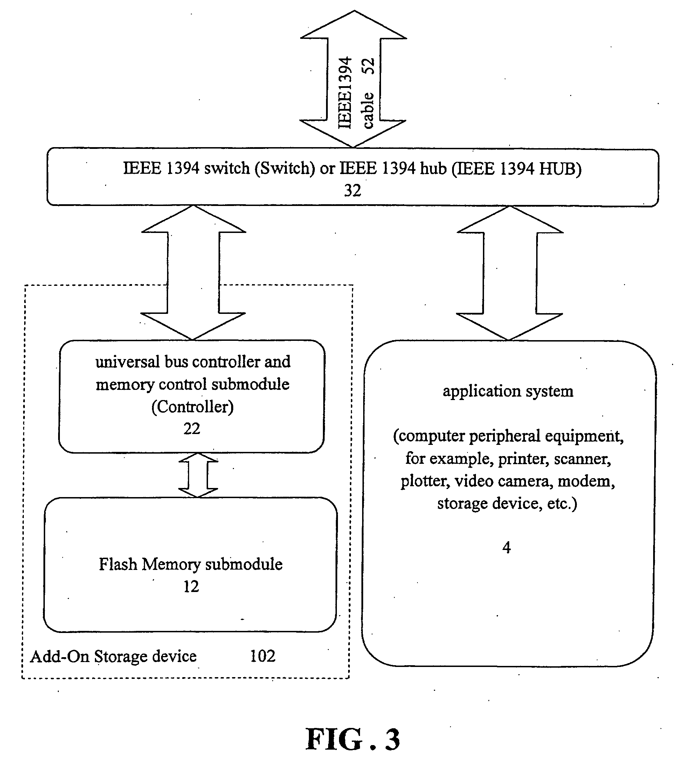

As shown in FIG. 3, it is another embodiment of the present invention of the computer peripheral having the additional storage function. The universal interface is IEEE1394 interface, and the semiconductor storage medium is Flash Memory in this embodiment. The IEEE 1394 bus interface switch (Switch) or IEEE 1394 bus interface hub 32 that is connected with the application system 400 and Add-On Storage device 100 is connected to the host computer system through IEEE1394 interface 62. The Add-On Storage device 100 includes the storage device IEEE 1394 bus interface control sub-module 22, Flash Memory sub-module 11. The IEEE 1394 bus interface switch or IEEE 1394 bus interface hub 32 is connected respectively with the IEEE 1394 bus interface control sub-module 42 of the application system and IEEE 1394 bus interface control sub-module 22 of the storage device, and the storage device IEEE 1394 bus interface control sub-module 22 is connected with the Flash Memory sub-module 11. All of these connections support the bidirectional flow of signals and data.

In the present embodiment, the Flash Memory sub-module 11 includes one or more semiconductor Flash Memory chips, connected in the existing addressing mode. The function of the module is to store the drive programs and other data of the previous common computer peripheral equipments, that is, the application system 400.

The Flash Memory chip corresponds to a memory space,or can be divided into at least two memory spaces.

The storage device 1394 bus interface control sub-module 22 implements the connection with the host computer system, interprets, converts, controls and transmits IEEE 1394 interface protocol. It completes the initialization and control of IEEE 1394 bus interface 62, receives the commands and data sent from the host computer, interprets and carries out the commands from the host computer, writes/reads the data into/from the Flash Memory, and returns the operation result to the host computer through IEEE 1394 bus interface 62.

The IEEE 1394 bus interface switch or IEEE 1394 bus interface hub 32 implements the function of IEEE 1394 bus interface switch or IEEE 1394 bus interface hub, wherein IEEE 1394 bus interface switch can select Add-On Storage device 100 to connect to the host computer, serving as a memory disk connected with the host computer, or select the application system 400 to connect to the host to operate directly, performing the function of the previous computer peripheral. The IEEE 1394 bus interface hub can select the Add-On Storage device 100 and the application system 400 to connect the host computer at the same time, wherein the host identifies and supports the Add-On Storage device 100 and the application system 400.

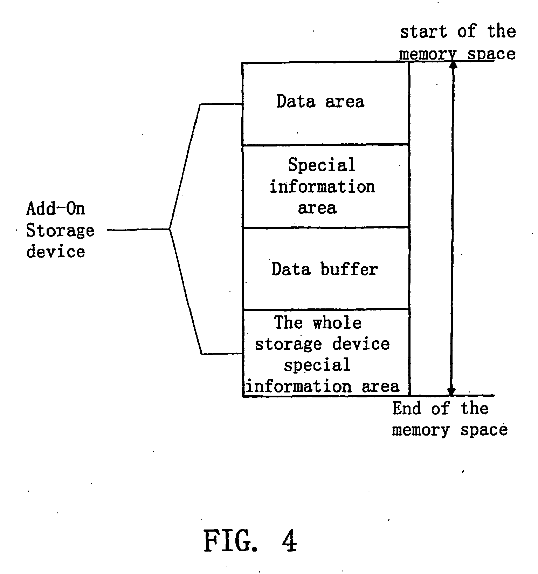

FIG. 4 is a distribution diagram of memory spaces of the embodiment of the present invention as shown in FIG. 2, wherein the memory spaces include data area, special information area, data buffer and the whole additional storage device special information area. The entire special information area of the additional storage device stores the information of the Add-On Storage device 100, such as, but not limited to, the records of Flash Memory damaged mass, user password, digital signature, and so on, but the special information area is not necessarily required. The entire memory module can be divided into N memory spaces. Each memory space may correspond to one memory disk.

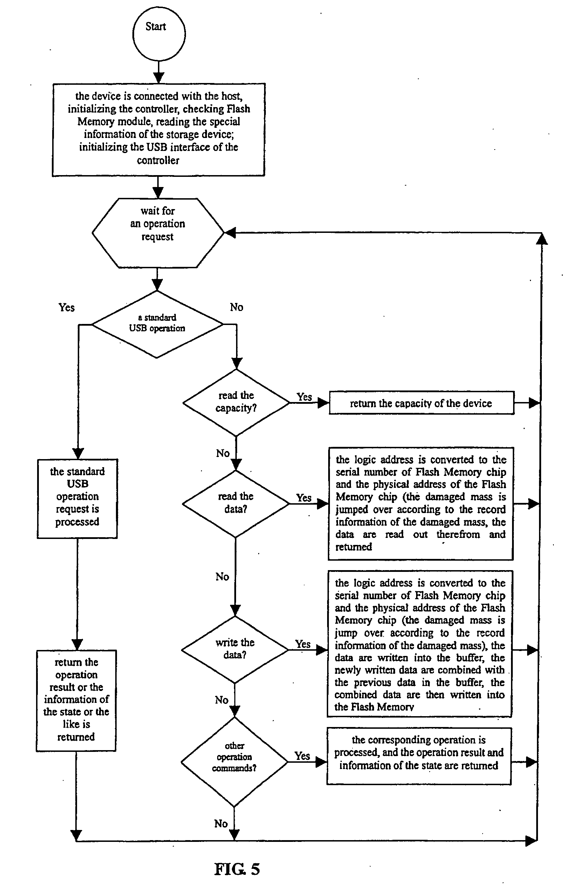

FIG. 5 is a working flow chart of the embodiment having additional storage function of the present invention, as shown in FIG. 2, when operating SFF8070i device sub-class and Bulkonly transmission protocol, and selecting the Add-On Storage device 100 to connect to the host computer, serving as the memory disk connected with the host computer to perform the storage function through the USB interface switch or USB interface hub.
Step 1: It connects with the USB interface of the host computer system, obtains the power supply from the USB interface 61, and turns on the Add-On Storage device 100; thereby initializing the USB interface and the storage device USB interface control sub-module 21; checking the Flash Memory sub-module 11, and reading the special information of Add-On Storage device 100;
Step 2: Wait for an operation request;
Step 3: It is determined whether it is a standard USB operation request when the operation request occurs;
Step 4: If it is a standard USB operation request, the standard USB operation request is processed, and the operation result or the information of the state is returned, and then return to Step 2;
Step 5: If it is not a standard USB operation request, it is determined whether it is the read capacity operation request;
Step 6: If it is a read capacity operation request, the device storage capacity is returned, and then return to Step 2, otherwise it is determined whether it is a read data operation request;
Step 7: If it is a read data operation request, the logic address is converted to the serial number of Flash Memory chip and the physical address of the Flash Memory chip, and the damaged mass is jumped over according to the record information of the damaged mass and the other corresponding processes, and the data are read out therefrom and returned, and then return to Step 2; otherwise it is determined whether it is the write data operation request;
Step 8: If it is a write data operation request, the logic address is converted to the serial number of Flash Memory chip and the physical address of the Flash Memory chip, and the damaged mass is jump over according to the record information of the damaged mass and the other corresponding processes, and the data are written into the buffer, and the newly written data are combined with the previous data in the buffer, the combined data are then written into the buffer, and then return to Step 2; otherwise it is determined whether there is any other operation request;
Step 9: If it is another operation request, the corresponding operation is processed, and the operation result and information of the state are returned, and then return to Step 2; otherwise return to Step 2 directly.

Once the host is power off, or the device is pulled out from the host system, the device will stop working.

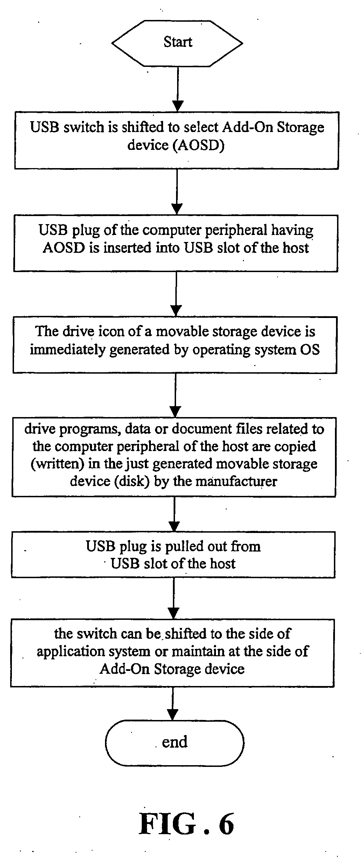

FIG. 6 illustrates the working procedure of the embodiment of the invention as shown in FIG. 2, where the manufacturer uses the additional memory disk, when the switch is used.
Step 1: The USB switch is shifted to select the Add-On Storage device;
Step 2: The USB plug is inserted into USB slot of the host;
Step 3: The drive icon of a movable storage device is immediately generated by the operating system;
Step 4: The manufacturer may copy the driver programs, data or document files with respect to the application system 400 of the previous common computer peripheral into the just generated movable storage device;
Step 5: The USB plug is pulled out from USB slot of the host;

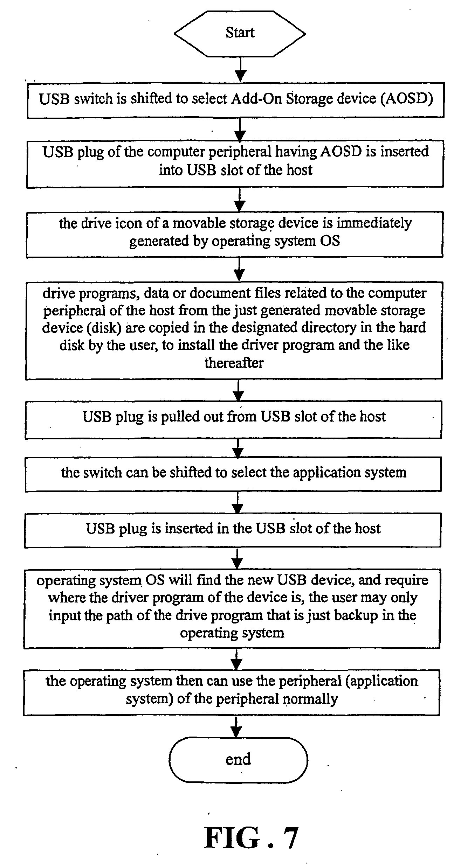

FIG. 7 illustrates the procedure of the embodiment of the invention shown in FIG. 2, where the user uses the Add-On Storage device 100 and the previous computer peripheral of the application system 400 when the switch is used.
Step 1: The switch is shifted to select the additional semiconductor storage function;
Step 2: The USB plug is inserted into USB slot of the host;
Step 3: The drive icon of a movable storage device is immediately generated by the operating system;
Step 4: The user may copy the drive program, data or document files with respect to the application system 400 of the previous common computer peripheral from the just generated movable storage device into the designated directory, in order to install the drive programs and the like;
Step 5: The user may also use the additional memory disk to store and read other files or data, or updated drive programs.
Step 6: The USB plug is pulled out from the USB slot of the host;
Step 7: The switch is shifted to select the previous common computer peripheral of the application system 400;
Step 8: It connects to the USB slot of the host computer through USB connector;
Step 9: The operating system will find the new USB device (the previous common computer peripheral), and require where the drive program of the device is, and then the user may input the path of the drive program that is just backup, and the operating system may then use the application system 400 of the peripheral normally.

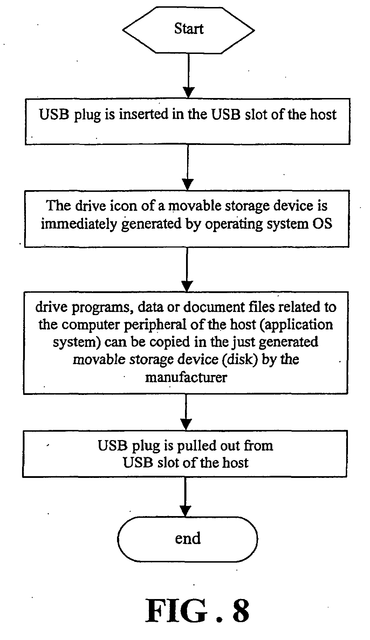

FIG. 8 illustrates the procedure of the embodiment of the invention as shown in FIG. 2 where the manufacturer uses the additional memory disk to store the program and files when the USB HUB is used.
Step 1: The USB plug is inserted into USB slot of the host;
Step 2: The operating system identifies automatically and generates immediately a drive icon of a movable storage device;
Step 3: The manufacturer may copy driver programs, data or document files with respect to the application system 400 (the previous common computer peripheral) into the just generated movable storage device;
Step 4: The USB plug is pulled out from USB slot of the host;

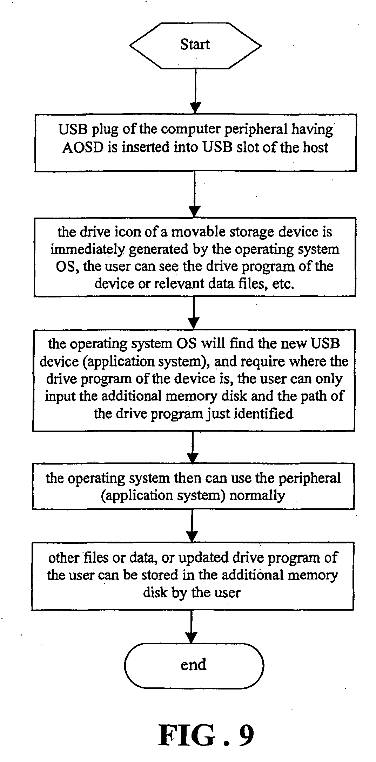

FIG. 9 is the procedure of using additional memory disk and its device by the user when the USB HUB is used internally in the embodiment as shown in FIG. 2 of the invention.
Step 1: The USB plug is inserted into USB opening of the host;
Step 2: The operating system identifies automatically and generates immediately a drive icon of a movable storage device, and the user may see the drive program or relevant data files of the device;
Step 3: The operating system OS will find the new USB device (the previous common computer peripheral), and require where the drive program of the device is, and the user may input the path of the drive program that is just identified, and the operating system can then use the peripheral device normally.
Step 4: The user may also use the additional memory disk to store and read other files or data, or updated drive programs.

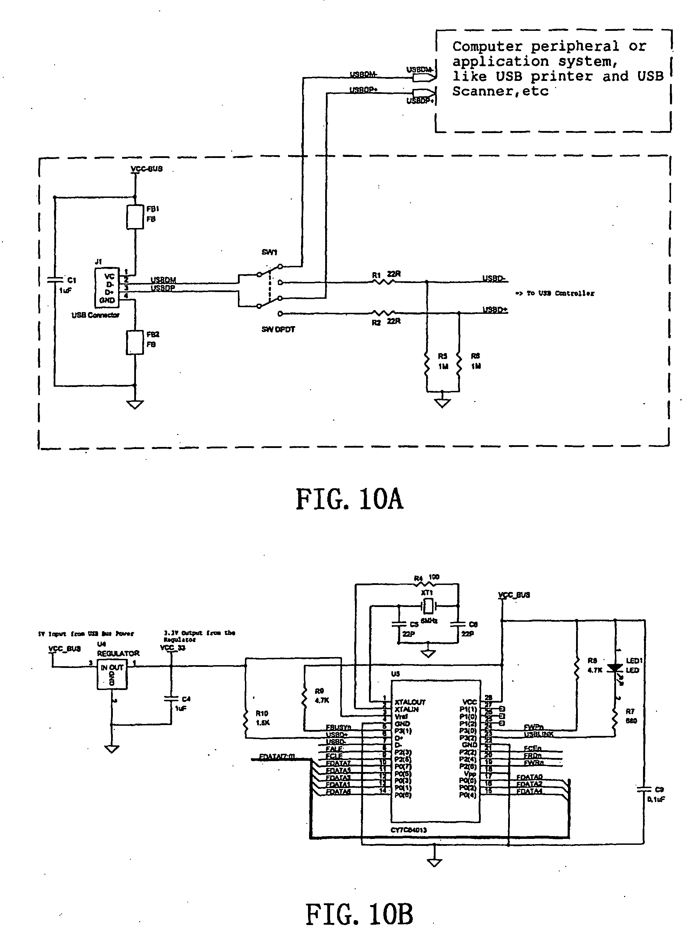

FIG. 10A is a circuit schematic diagram of the internal USB interface switch 31 of the embodiment shown in FIG. 2 of the present invention. 2, 3 pins of the USB connector are connected to the switch SW1 that can be shifted between two states, and in the first state, the connection can perform the application system 400 of the computer peripheral application function, and in the second state, 2, 3 pins of the USB connector are connected with AOSD through the resistances R1, R2 of 22 ohm, wherein there is a separate resistance of 1 mega ohm grounded between the R1, R2 and AOSD.

FIG. 10B is a circuit schematic diagram of the internal storage device USB interface control sub-module 21 of the embodiment of the present invention shown in FIG. 2. U5 is the USB controller, U4 is a three-terminal stabilized voltage supply of 3.3v, and U4 provides the power of 3.3v to U5. XT1 is a crystal oscillator of 6MHz, which is connected with U5.

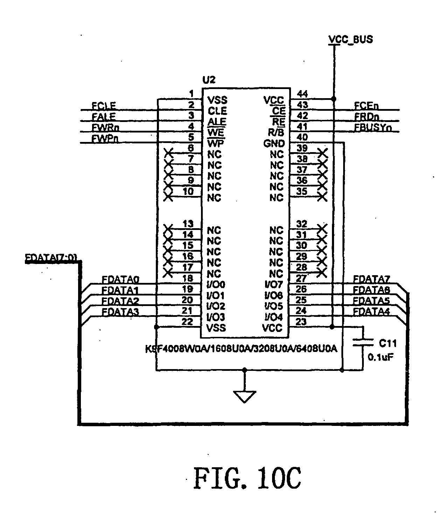

FIG. 10C is a circuit schematic diagram of the internal Flash Memory sub-module 11 of the embodiment of the present invention shown in FIG 2. U2 is a NAND Flash Memory, which is connected with and controlled by U5.

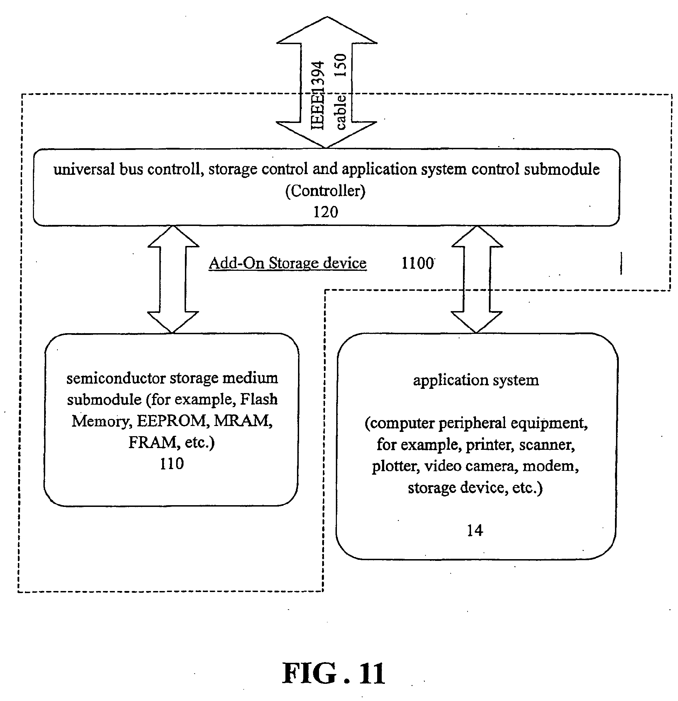

FIG. 11 illustrates another embodiment of the computer peripheral of the present invention having additional storage function. This embodiment includes a multiple controller sub-module 70, a semiconductor memory sub-module 10, and an application system sub-module 50, wherein the multiple controller sub-module 70 is connected respectively with the semiconductor storage sub-module 10 and the application system sub-module 50. All of these connections may support the bidirectional flow of the signals and data. The whole device is connected with the host computer system through the universal bus interface 60.

The embodiment is a combined device, which consists of two sub-devices, one performing the function of the application system, and the other performing the function of the semiconductor storage device. Each sub-device has a different logical unit number, wherein the drive program, the application program and the like supporting the application system sub-devices are stored in the storage sub-devices.

In the present embodiment, the multiple control sub-module 70 implements the function of controlling the storage device and the application system universal interface. It implements the connection with the host system, and interprets, converts, controls and transmits the universal interface protocol; and implements the initialization and control of the universal bus interface 60. The module receives the data sent from the host through the universal bus interface 60, and then the data are distributed to the application system sub-module 50 or the semiconductor memory sub-module 10 according to the logical unit number of the data. The multiple control sub-module 70 receives data packets from the application system sub-module or the semiconductor memory sub-module 10, and then indicates the corresponding logical unit number in data packets, and sends them to the host system through the universal bus interface 60.

The semiconductor sub-module 10 implements the function of the semiconductor memory sub-device, and performs the device protocol of the mass storage, which can be UFI protocol, or SFF80201 protocol, or SFF80701 protocol, or SCSI Transparent Command Set protocol, or Reduced Block Commands (RBC) T10 Project1240-D protocol. It receives the commands of control, reading data, writing data and so on sent from the host through the multiple controller sub-module 70, then interprets the commands and carries them out, writes/reads the data into/from the semiconductor medium, and then returns the corresponding state to the host through the multiple controller sub-module 70.

The application system sub-module 50 implements the function of the application system, and performs the device protocol of the application system, which can be printers, or scanners, or plotters, or video cameras, or Modems, or digital cameras, or MP3 players, or palm computers, or PDAs, or storage devices. The application system sub-module 50 receives the control commands sent from the host through the multiple controller sub-module 70, then interprets and carries out the control commands, and then it sends the operation result to the host through the multiple controller sub-module 70.

The current operating systems of the host, such as Windows Me/2000/XP/Mac OS 9.0/X/Linux 4.2.x all carry their own drive program of the mass storage of the universal interface, and when the computer peripheral having additional storage function of the embodiment of the invention is connected to the host computer, it can be immediately identified by the host computer (using the self-provided drive program of the storage device in the host computer itself without any additional drive program). The drive program of the application system sub-device is found from the storage device and automatically installed by the host computer so that the automatic installation of the drive program of the application system sub-device is achieved.

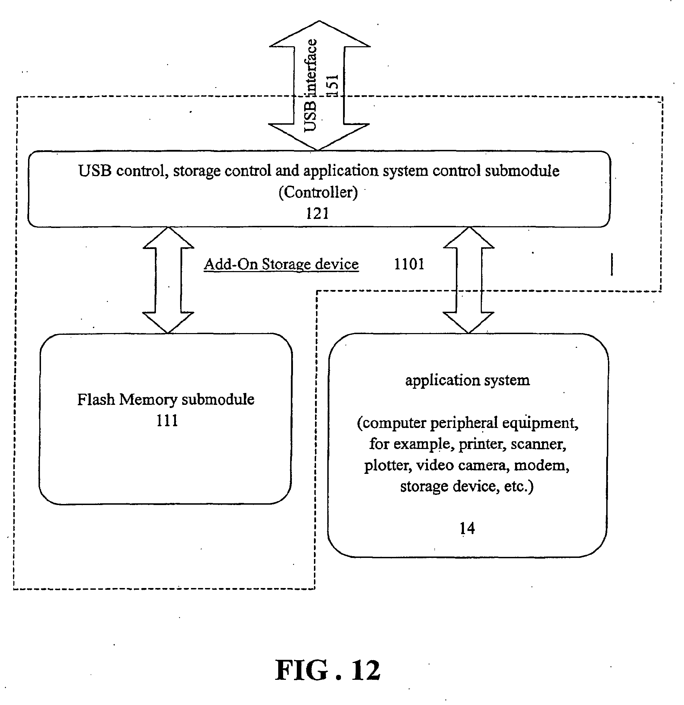

FIG 12 is the block functional diagram of the embodiment of FIG. 11, in which the USB interface replaces the universal interface for connection with the host computer, and the Flash Memory serves as the semiconductor storage medium. The construction of the modules of the multiple device and the function of every module are similar to that of the embodiment as shown in FIG. 11, and will not be described in details for saving the words.

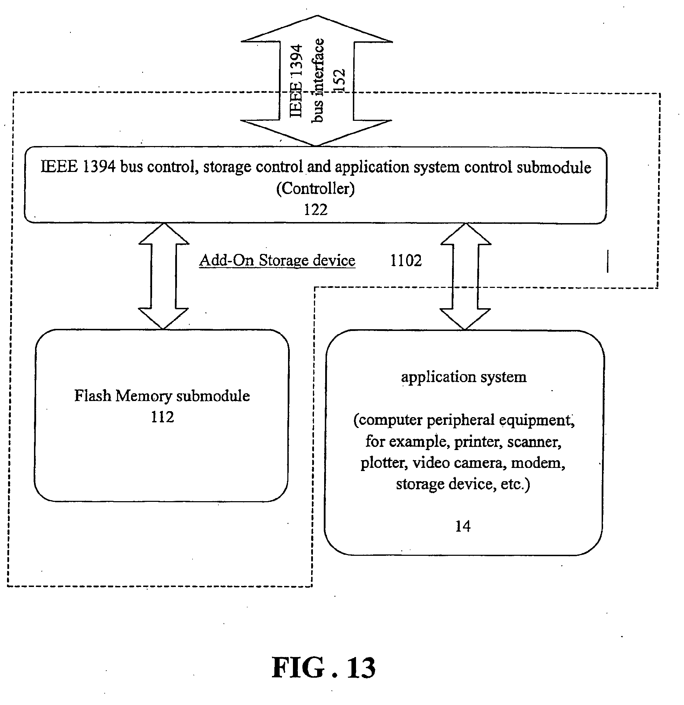

FIG 13 is the block functional diagram of the embodiment of FIG. 11, in which IEEE 1394 interface is used to replace the universal interface to connect with the host computer, and the Flash Memory serves as the semiconductor storage medium. The construction of the modules of the multiple device and the function of every module are similar to that of the embodiment as shown in FIG. 11, and will not be described in detail for saving the words.

## Claims

1. A method of adding storage function to computer peripherals, **characterized by** adding semiconductor storage devices that can be readily identified and read by a host computer into various computer peripherals, while the added semiconductor storage devices will not affect application functions of the computer peripherals.

2. The method of adding storage function to a computer peripheral according to claim 1, **characterized in that** said various computer peripherals or said additional semiconductor storage devices are selected to be connected with the host computer respectively through a universal bus interface switch, and identified by the host computer to performed the application functions of said various computer peripherals or the storage function of said additional semiconductor storage devices; or said various computer peripherals and said additional semiconductor storage devices are connected simultaneously through a universal bus interface hub, whereby said various computer peripherals and said additional semiconductor storage devices can be simultaneously identified by the host computer, thereby carrying out the application function of said various computer peripherals and the storage function of said additional semiconductor storage devices; or the universal bus interface control of said various computer peripherals and said additional semiconductor storage devices and the host is implemented by a multiple controller sub-module (70), thereby enabling the identification thereof by the host simultaneously to perform their respective functions.

3. A computer peripheral device having additional storage function, which is connected to a host computer through a universal interface, comprising an application system (400) capable of realizing the application functions of the computer peripheral device, **characterized by** including an additional semiconductor storage device (100), from/into which drive programs, application programs, data files, and the like can be read/written and the application programs can be carried out by the host computer.

4. The computer peripheral device having additional storage function according to claim 3, **characterized in that** the storage function of said semiconductor storage device is implemented by a multiple control sub-module (70) and the semiconductor memory sub-module (10) together; the application function of the computer peripheral is implemented by the multiple control sub-module (70) and the application system sub-module (50) together; the universal bus interface control between said application system (400) and said additional semiconductor storage device (100) and the host computer is implemented by the multiple control sub-module (70), wherein the multiple control sub-module (70) implements the connection with the host computer, interprets, converts, controls and transmits the universal interface protocol to complete the initialization and control of the universal bus interface (60); said application system (400) and said additional semiconductor storage device (100) have different logical unit numbers, and the multiple control sub-module (70) receives data sent from the host computer through the universal bus interface (60), and distributes them to the application system sub-module (50) or the semiconductor memory sub-module (10) according to the logical unit number in the data; and said multiple control sub-module (70) receives data packets from the application system sub-module (50) or the semiconductor memory sub-module (10), indicates the corresponding logical unit number, and sends to the host computer through the universal bus interface (60).

5. The computer peripheral device having additional storage function according to claim 3, **characterized by** including a universal bus interface switch or a universal bus interface hub (30), said universal bus interface switch being capable of selecting the application system (400) performing the application function of the computer peripheral to connect with the host computer to perform the application function, or selecting the additional semiconductor storage device (100) to connect with the host computer to perform the storage function; the universal bus interface hub enabling the application system (400) performing the application function of the computer peripheral and the additional semiconductor storage device (100) to connect to the host computer simultaneously to perform their functions; the universal bus interface switch or the universal bus interface hub (30) being connected with the host computer through the universal bus interface (60), and connected respectively with said application system (400) and said additional semiconductor storage device (100), wherein all of these connections support the bidirectional flow of the signals and data.

6. The computer peripheral device having additional storage function according to claim 3, **characterized by** including an additional semiconductor storage module enabling switch for enabling and disabling the function of the additional semiconductor storage device (100); said enable switch being connected with a storage device universal bus interface controller sub-module (20).

7. The computer peripheral device having additional storage function according to claim 3, **characterized in that** the device protocol of floppy disk drive can be implemented when the storage function is performed, stimulating and implementing the storage function of a floppy disk running in a floppy disk drive; or the device protocol of a CDROM drive can be implemented, thereby stimulating and implementing the storage function of a CD running in a CDROM drive; or the device protocol of hard drive is implemented, thereby stimulating and implementing the storage function of a hard drive; or the device protocol of ZIP disk is implemented, thereby stimulating and implementing the storage function of ZIP disk; or further the device protocol of MO disk is implemented, thereby stimulating and implementing the storage function of MO disk.

8. The computer peripheral device having additional storage function according to claim 3, **characterized in that** when the storage function is performed, the device protocol supported by the device is UFI protocol, or SFF80701 protocol, or SCSI Transparent Command Set protocol, or Reduced Block Commands (RBC) T10 Project1240-D protocol, or ZIP disk protocol, or MO disk protocol.

9. The computer peripheral device having additional storage function according to claim 3, **characterized by** the semiconductor storage medium in said semiconductor storage medium module can be selected from Flash Memory or EEPROM or MRAM or FRAM or two or more of the aforesaid medium; the semiconductor storage medium module corresponding to one or more memory space, each memory space corresponding a memory disk; a special information area storing information, code, user digital signature, and the like with respect to the memory disk; the memory space of each memory disk including a data area, a special information area and a data buffer; the special information of said special information area including information, code, user digital signature, and the like with respect to the memory disk; the buffer being used as temporary memory for data exchange.

10. The computer peripheral device having additional storage function according to claim3, **characterized in that** said semiconductor storage device (100) includes a storage device universal bus interface controller sub-module (20) and semiconductor memory sub-module (10), which are connected sequentially and support the bidirectional flow of signals and data; said application system (400) performing the application function of the computer peripheral includes an application universal bus interface control sub-module (40) and the application system sub-module (50), which are connected sequentially and support the directional flow of signals and data.
